# EUROPEAN PATENT APPLICATION

(11) **EP 2 263 451 A2**
(43) Date of publication of application: **22.12.2010**
(21) Application number: 10165728.6
(22) Date of filing: 11.06.2010
(51) Int. Cl.: A01K 5/00

(54) **An apparatus for mixing and dispensing material, especially animal feed**

(30) Priority: 18.06.2009 DK 200970034
(71) Applicant: JF-Fabriken - J. Freudendahl A/S, 6400 Sønderborg (DK)
(72) Inventor: Pedersen, Ove, 6200, Aabenraa (DK)
(74) Representative: Joergensen, Bjoern Barker

(57) **Abstract**

An apparatus for mixing and dispensing material, especially animal feed, comprises a discharge opening (9) and a guard (26) covering the discharge opening (9) from above. The discharge opening has a lower delimitation (39), at which a shield member (37) is provided to be movable between a shielding position, in which it is restricting access to the discharge opening (9) from below, and an open position, in which it allows material to be dispensed.

## Description

The present invention relates to an apparatus for mixing and dispensing material, especially animal feed, said apparatus comprising a discharge opening and a guard covering the discharge opening from above, the discharge opening having a lower delimitation.

Apparatuses for mixing and dispensing animal feed through a discharge opening covered by a guard are known e.g. from EP 1 068 797, wherein the guard comprise a rigid shield which by means of an actuating device is moved to an open position prior to dispensing material. The apparatus comprises a closing member for opening and closing the discharge opening and the opening movement of the guard is coordinated with the opening movement of the closing member. The apparatus is provided with ground engaging wheels to allow the apparatus to be pulled e.g. along a line of troughs in an animal house for dispensing feed into the troughs.

GB 2 139 911 discloses another, elder apparatus for mixing and dispensing animal feed. This apparatus likewise comprises ground engaging wheels, and it has a rigid shield rotatable between a closed position and an open position around a horizontal axis above a discharge opening. At the lower delimitation of the discharge opening a slide is provided to be rotatable around another horizontal axis between a vertical inactive position and an oblique position in which it can guide dispensed material away from the apparatus and e.g. into feeding troughs in an animal house.

As in these two prior art examples the apparatus for mixing and dispensing animal feed usually comprises a body such as a container with movable e.g. rotatable elements inside the body for mixing and/or shredding material to be dispensed.

Today guards around discharge openings of apparatuses for mixing and dispensing animal feed, like the guards mentioned above, are subject to safety regulations, because access from the outside of the apparatus to the inside through the discharge opening should be restricted to prevent a person from reaching and be harmed by moving elements inside the apparatus by reaching through the discharge opening. In order to fulfil such regulations guards covering a discharge opening from above in some constructions need to be rather long, i.e. to extend rather far downwards from its point of attachment above the discharge opening, which can be unhandy in relation to the dispensing process.

The object of the present invention is to avoid or minimise such drawbacks of prior art apparatuses.

This is fulfilled according to the present invention by an apparatus, wherein at said lower delimitation a shield member is provided to be movable between a shielding position, in which it is restricting access to the discharge opening from below, and an open position, in which it allows material to be dispensed. By introducing a shielding member at the lower delimitation the geometry of a possible, but unintended, access way from the outside of the apparatus to the inside through the discharge opening may be changed to reduce the need of longitudinal downwards extent of the guard covering the discharge opening from above.

In a practical embodiment the shielding member is rotatable about an axis to be movable between the shielding position and the open position.

Preferably the shielding member is yieldingly stressed towards the shielding position, e.g. by a spring. Hereby is obtained that the shielding element will automatically occupy its shielding position, when material is not dispensed, while dispensed material may overcome the stressing force and move the shielding member to its open position.

In a practical embodiment a slide is present below the shielding member, defining the open position of the shielding member, which is preferably a shielding plate.

Preferably the shielding element in its shielding position extends at least 230 mm away from any movable elements inside of the discharge opening.

In the following the invention will be explained in more details by means of an example with reference to the accompanying drawings, in which
Fig. 1 is a perspective view of a front part of an apparatus according to the invention,
Fig. 2 is a side view of a part of the apparatus according the invention,
Fig. 3 is a section along line III-III in Fig. 2 with a guard in an open position,
Fig.4 is a perspective view corresponding to Fig. 1, but with the guard in the open position,
Fig. 5 and 6 are perspective views corresponding to Fig. 1 of an insignificantly varied embodiment of the apparatus according to the invention showing a shielding element in a shielding and an open position, respectively, and
Fig. 7 is a view corresponding to Fig. 6 of a variant embodiment.

An apparatus according to the present invention is shown in the figures and comprises a container with a side wall 1 and a bottom 2. Below the container the apparatus comprises an undercarriage 4 with ground engaging wheels 3 of which only one is visible in the figures, and a tongue 5 for hitching the apparatus to a tractor to be towed by it. Inside the container a mixing element 7 is present. The mixing element 7 of which only a part is shown is rotatable around a vertical axis. Inside the container the mixing element 7, which is also known as a vertical auger, may shred and chop bales of hay or silage and mix the straw fodder thus chopped with other types of feed.

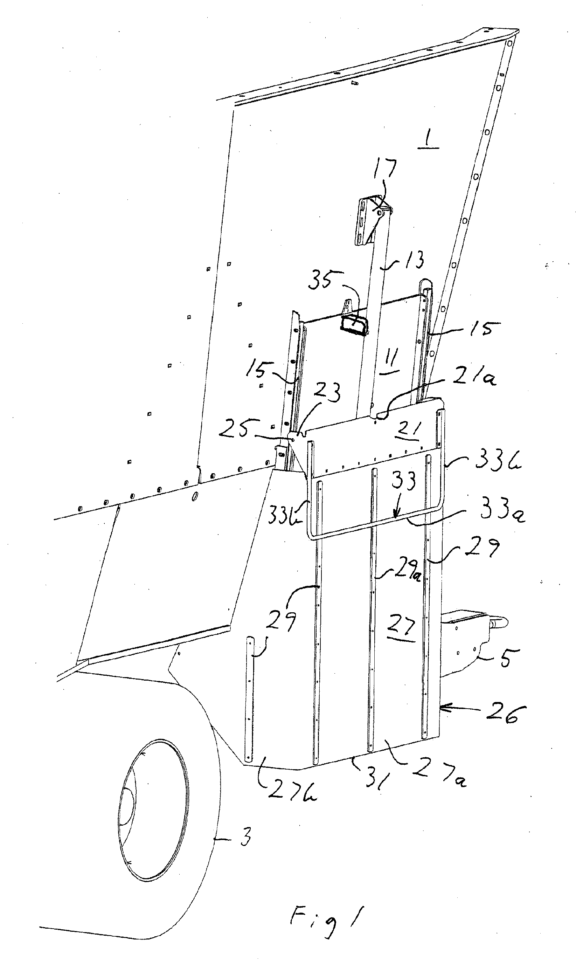

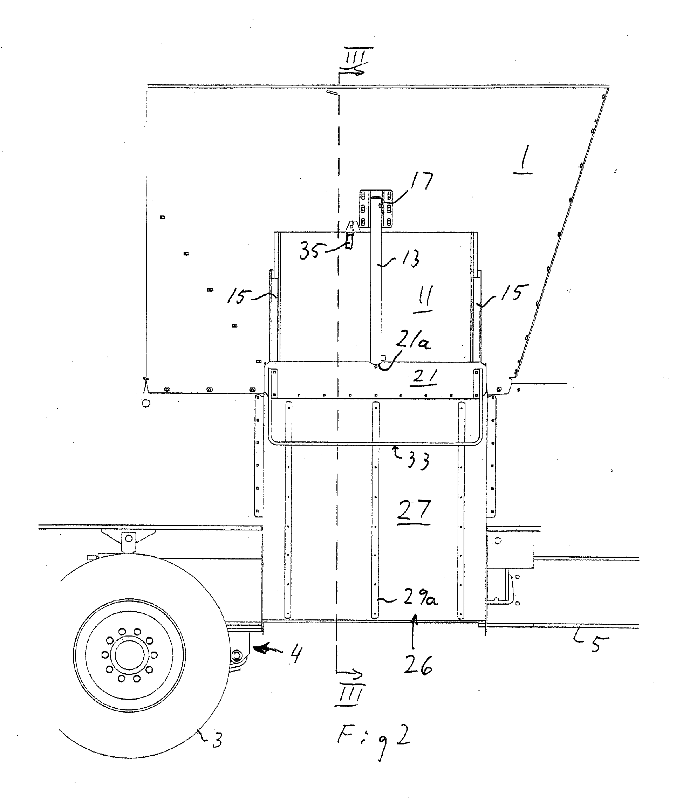

In the side wall 1 a discharge opening 9 is present for allowing feed mixed in the container by means of the mixing element 7 to be dispensed. The discharge opening 9 is provided with a generally flat closing member 11, which is vertically (as seen in Fig. 2) shiftable by means of a hydraulic cylinder 13 between an upper open position shown in the Figs. 2-4 and a lower closed position not shown. Fig. 1 shows the closing member 11 in an intermediate position. Thus the closing member 11 is held by guideways 15 at the lateral sides of the discharge opening 9. The hydraulic cylinder 13 is attached at one end to a bracket 17 mounted on the side wall 1, and a piston rod 18 of the hydraulic cylinder 13 is attached to a second bracket 19 positioned on the lower part of the closing member 11.

Spanning the width of the discharge opening a guard carrier 21 is mounted above the discharge opening 9. The guard carrier 21 is a flat member with folded-up lobes 23 at its ends, and through said lobes 23 the guard carrier 21 is attached by bolts 25 to elements fixed to the side wall to be able to rotate around a horizontal axis defined by the bolts 25, of which only one is seen in the figures. The guard carrier 21 has an upper edge with a central notch 21a. A guard 26 comprising a flexible sheet or rubber curtain 27 is attached to the guard carrier 21 to hang down in front of the discharge opening 9. The rubber curtain is provided with stiffening elements in the form of rigid slats 29 extending from the vicinity of the guard carrier 21 to a lower edge 31 of the rubber curtain. By preventing the rubber curtain to fold about horizontal lines these slats 29 prevent the rubber curtain from being pressed into the discharge opening to get in contact with the mixing element 7. Still the rigid slats 29 allow the rubber curtain 27 to flap and rotate in relation to the guard carrier 21 due to the flexibility of the rubber curtain, and the rigid slats 29 allow the rubber curtain 27 to fold about vertical lines or lines running between the rigid slats 29.

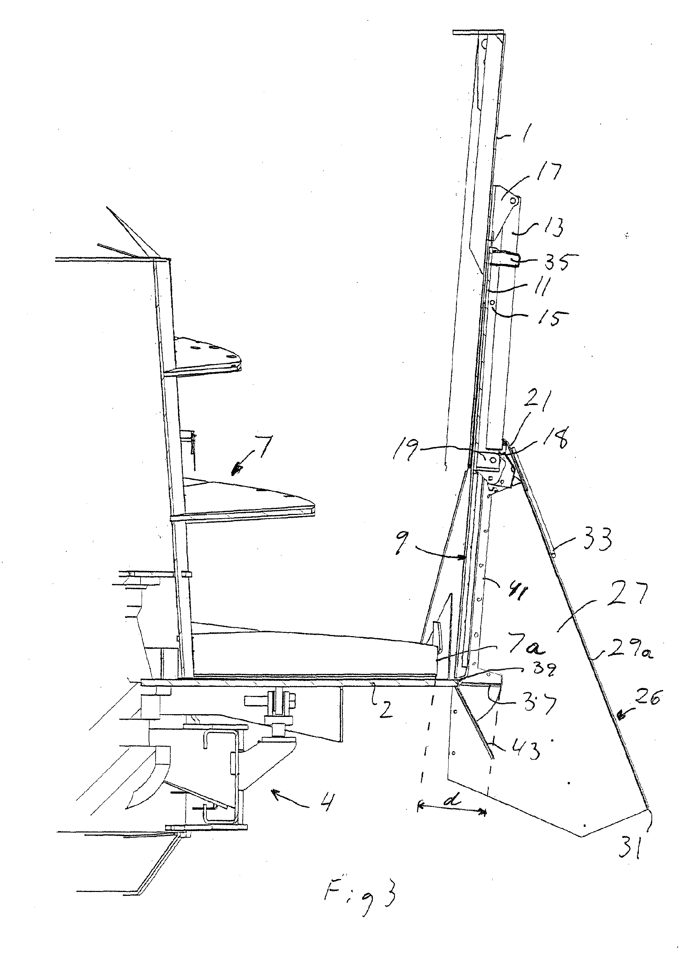

The rubber curtain 27 prevents for safety reasons access to the interior of the container and the mixing device 7 therein. To effectively prevent such access the rubber curtain is apart from being attached to the guard carrier 21 also attached to the side wall 1 of the container along the lateral sides of the discharge opening. Thus the rubber curtain 27 comprises integral side portions 27b and central portion 27a, the latter extending in front of the discharge opening 9 and the former extending to the side wall 1 on either side of the discharge opening 9. The side portions 27b of the rubber curtain are sufficiently large to allow the central portion 27a to rotate around the horizontal axis defined by the bolts 25 to an open position e.g. shown in Fig. 3. The side portions 27b will fold to allow the central portion 27a to assume a more or less retracted position as shown e.g. in Fig. 1.

An abutment configured in the present embodiment as an abutment bar 33 is attached to the guard carrier 21 and has a central portion 33a extending across the central portion 27a of the rubber curtain 27 and its rigid slats. Thus the central portion of the abutment bar 33 is placed at a distance from the guard carrier and the attachment of the rubber curtain. End portions 33b of the abutment bar are bend relative to the central portion 33a to be rigidly attached to the guard carrier. In the embodiment shown the central portion 33a of the abutment bar 33 is straight and extends parallel to the guard carrier 21.

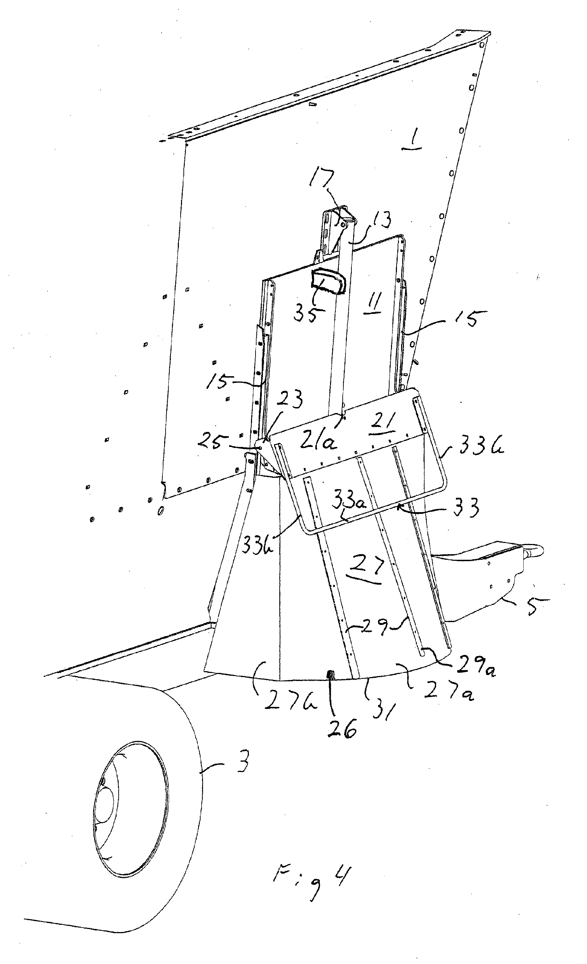

When the rubber curtain 27 or a part of its central portion 27a is moved from a more or less retracted hanging-down position as shown in Fig 1 to an open position as shown in Fig. 3 or Fig. 4, either by feed exiting through the discharge opening or by a person grapping the lower edge 31 of the rubber curtain, then one or more of the slats 29 will abut against the central portion of the abutment bar 33, which will be rotated together with the guard carrier 21 around the axis defined by the bolts 25. The guard carrier 21 will rotate until its upper edge at the notch 21a abuts against the hydraulic cylinder 13, which will prevent further rotation in the current direction. Thus further movement of the rubber curtain 27 and the respective rigid slat(s) 29 in the direction away from the discharge opening, which would entail raising of the lower edge 31 of the rubber curtain above a predetermined height, is likewise prevented.

As indicated in Fig. 4, if only a part of the rubber curtain, e.g. a part around a central slat 29a, is stressed in a direction away from the discharge opening, then the remaining parts of the rubber curtain may assume positions hanging down more vertically. Thus feed exiting through the discharge opening need not necessarily push away or lift the entire rubber curtain.

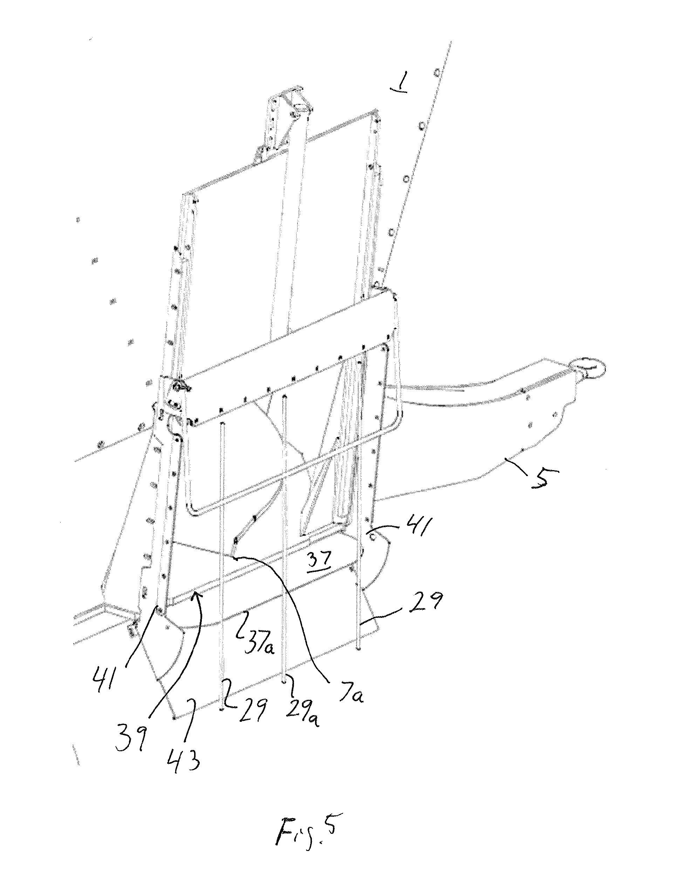

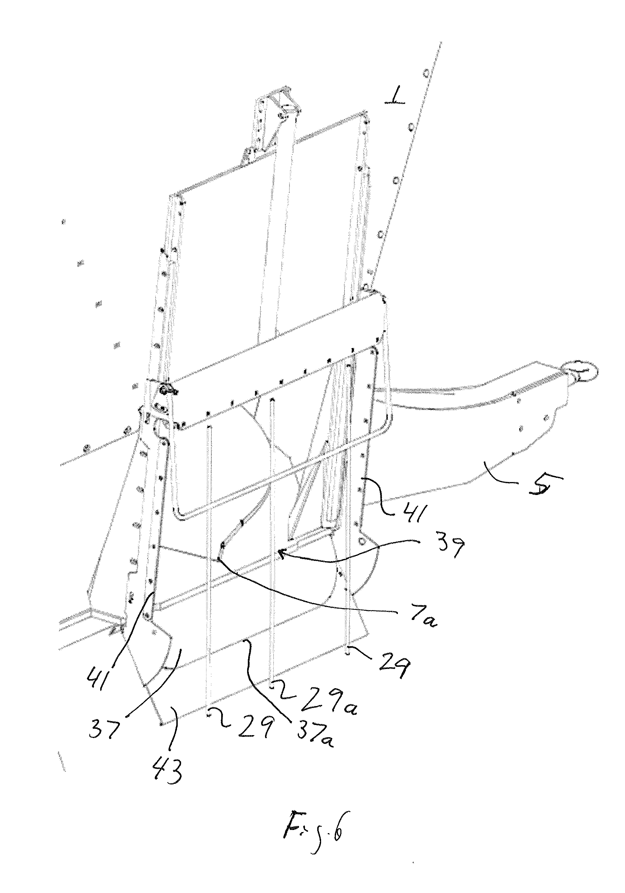

Figs. 5 and 6 show in a perspective view corresponding to Fig. 1 part of an apparatus according to the invention in an embodiment insignificantly varied relative to the embodiment shown in Fig. 1. Being insignificant to the present invention the varied details are not referenced by reference numerals. In Figs. 5 and 6 the flexible sheet or rubber curtain 27 is omitted to show details beneath.

Thus as shown in Figs. 3, 5 and 6 the apparatus according to the present invention comprises a shielding member configured as a shielding plate 37, which is mounted at the lower delimitation 39 of the discharge opening 9 to be rotatable between a shielding position shown in Figs. 3 and 5 and an open position shown in Fig. 6.

Further the apparatus comprises mounting pieces 41 at the vertical sides of the discharge opening 9 for mounting of the flexible sheet 27. These mounting pieces are enlarged at their lower parts to shield the shielding plate 37 from the flexible sheet during operation. Extending from the lower delimitation 39 of the discharge opening 9 a slide 43 is provided for guiding material discharged from the discharge opening 9 away from the apparatus and e.g. towards a feed trough in an animal house.

A spring not shown urges the shielding plate 37 towards its shielding position shown in Fig. 3 and 5. The spring force may be overcome by feed discharged through the discharge opening 9, in which case the shielding element may be rotated to its open position shown in Fig. 6 in which is abuts the slide 43 thus allowing the feed to be dispensed.

The distance d between a part 7a of the mixing element closest to the discharge opening 9 and the outer free edge 37a of the shielding plate 37 should exceed a minimum measure e.g. 230 mm in order to fulfil safety regulations.

When in its shielding position the shielding plate 37 will prevent a person from extending an arm along the slide 43 to reach the mixing element 7. The distance d will prevent a person, who has extended an arm up beneath the flexible sheet 27 from reaching the mixing element 7 by flexing his or her wrist. Thus in its shielding position the shielding plate 37 restricts access to the discharge opening 9 from below.

In the embodiment shown in Figs. 1 to 4 the abutment is utilised for a second purpose: A driver 35 is provided on the upper part of the closing member 11. When the closing member 11 is brought to its lower closing position the driver will abut against the upper edge of the guard carrier 21 and rotate the latter in clockwise direction as seen in Fig. 3. Thereby the abutment bar 33 and the rubber curtain 27 will be brought to retracted positions close to the side wall 1 of the container and the rubber curtain will be prevented from flapping.

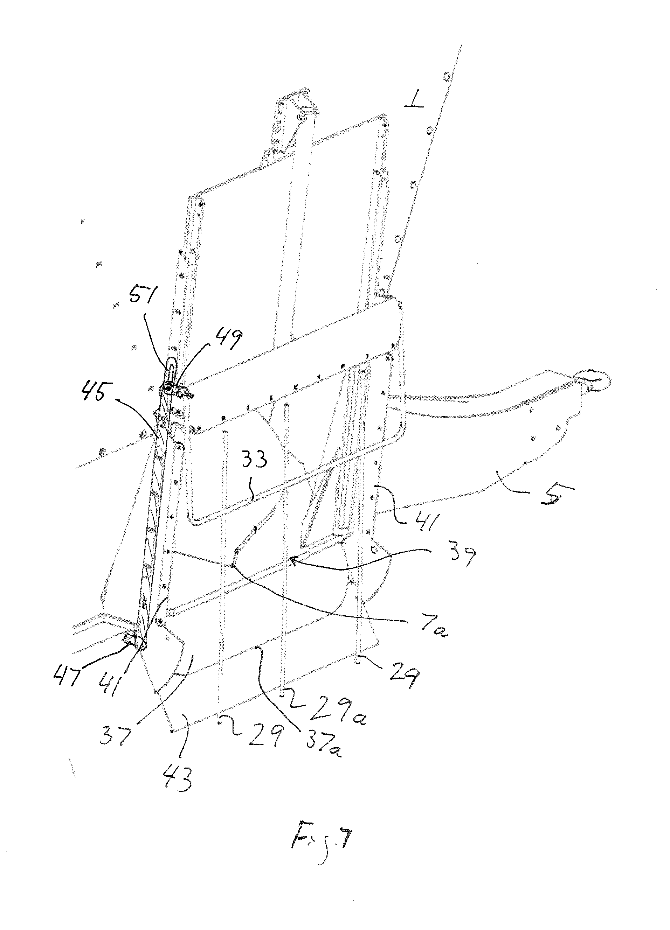

Fig. 7 shows a variant of the embodiment shown in Figs. 5 and 6, wherein a rod 45 is kinematically connecting the abutment bar 33 and the shielding plate 37. Thus a first lever 47 rigidly attached to the shielding plate 37 is hinged to the rod 45 at a lower end thereof and a second lever 49 rigidly attached to the abutment bar 33 is through an elongated hole 51 in the rod 45 hinged to the latter at an upper end thereof. Thus the shielding plate 37 will be turned down when the abutment bar 33 is raised by central portion of the rubber curtain moving to its open position e.g. due to feed exiting the discharge opening. Thus the shielding plate 37 is in fact kinematically connected with the rubber curtain. Due to the elongated hole 51 the abutment bar 33 will not be raised by the shielding plate 37, when the latter is turned down e.g. by feed exiting the discharge opening.

## Claims

1. An apparatus for mixing and dispensing material, especially animal feed, said apparatus comprising a discharge opening (9) and a guard (26) covering the discharge opening (9) from above, the discharge opening having a lower delimitation (39), **characterized in that** at said lower delimitation (39) a shield member (37) is provided to be movable between a shielding position, in which it is restricting access to the discharge opening (9) from below, and an open position, in which it allows material to be dispensed.

2. An apparatus according to claim 1, **characterized in that** the shielding member (37) is rotatable about an axis to be movable between the shielding position and the open position.

3. An apparatus according to claim 1 or 2, **characterized**
**in that** the shielding member (37) is yieldingly stressed towards the shielding position.

4. An apparatus according to claim 3, **characterized in that** the shielding member (37) is stressed by a spring.

5. An apparatus according to any of the preceding claims, **characterized in that** a slide (43) is present below the shielding member (37), defining the open position of the shielding member.

6. An apparatus according to any of the preceding claims, **characterized in that** the shielding member is a shielding plate (37).

7. An apparatus according to any of the preceding claims, **characterized in that** the guard (26) is movable between a open positions and a retracted position.

8. An apparatus according to claim 7, **characterized in that** the guard (26) has a defined fully opened position.

9. An apparatus according to claim 7 or 8, **characterized in that** the guard (26) comprises a flexible sheet (27) and at least one stiffening element (29).

10. An apparatus according to any of claims 7 to 9, **characterized by** an abutment (33) restricting a movement of the at least one stiffening element (29) in a direction away from the discharge opening (9).

11. Apparatus according to any of the claims 1 to 10, **characterized in that** the shield member (37) is kinematically connected with the guard (26).
